(19) Europäisches Patentamt
European Patent Office
Office européen des brevets

(11) **EP 1 532 757 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(21) Anmeldenummer: **03790634.4**

(22) Anmeldetag: **07.07.2003**

(51) Int Cl.:
*H04B 10/073* (2013.01)     *H04B 10/291* (2013.01)
*H01S 3/08* (2006.01)     *H01S 3/30* (2006.01)

(86) Internationale Anmeldenummer:
**PCT/DE2003/002266**

(87) Internationale Veröffentlichungsnummer:
**WO 2004/021612 (11.03.2004 Gazette 2004/11)**

(54) **VERFAHREN ZUR ERMITTLUNG DES GEWINNSPEKTRUMS EINES RAMAN-VERSTÄRKERS IN EINEM WDM-ÜBERTRAGUNGSSYSTEM**

METHOD FOR DETERMINING THE GAIN SPECTRUM OF A RAMAN AMPLIFIER IN A WDM-TRANSMISSION SYSTEM

PROCEDE DE DETERMINATION D'UN SPECTRE DE GAIN D'UN AMPLIFICATEUR DE RAMAN DANS UN SYSTEME DE TRANSMISSION A MULTIPLEXAGE EN LONGUEUR D'ONDE

(84) Benannte Vertragsstaaten:
**DE ES FR GB IT**

(30) Priorität: **27.08.2002 DE 10239304**

(43) Veröffentlichungstag der Anmeldung:
**25.05.2005 Patentblatt 2005/21**

(73) Patentinhaber: **Xieon Networks S.à.r.l.
1748 Luxemburg (LU)**

(72) Erfinder: **KRUMMRICH, Peter
81379 München (DE)**

(74) Vertreter: **Lucke, Andreas et al
Boehmert & Boehmert
Anwaltspartnerschaft mbB
Patentanwälte Rechtsanwälte
Pettenkoferstrasse 20-22
80336 München (DE)**

(56) Entgegenhaltungen:
**WO-A-00/73826          WO-A-02/30018
US-A1- 2002 044 336     US-A1- 2002 071 173**

**Beschreibung**

Die Erfindung betrifft ein Verfahren und eine Anordnung zur Ermittlung des Gewinnspektrums eines Raman-Verstärkers gemäß den Patentansprüchen 1 und 4.

Die Anwendung der verteilten Raman-Verstärkung in der Übertragungsfaser erlaubt eine deutliche Verbesserung der Eigenschaften optischer Übertragungssysteme. Beispielsweise lassen sich bei gleichem optischen Signal-Rauschabstand am Streckenende durch den Einsatz dieser Technik die Längen der einzelnen Streckenabschnitte vergrößern oder es lassen sich mehr Streckenabschnitte überbrücken.

Beim Einsatz der Technik in WDM-Systemen sollte der Raman-Gewinn ein flaches Gewinnspektrum aufweisen, damit alle Kanäle gleichermaßen profitieren. Andernfalls wird die erzielbare Systemverbesserung durch den Kanal mit dem geringsten Gewinn begrenzt. Der höhere Gewinn der anderen Kanäle entspricht einer ineffizienten Nutzung der eingesetzten Pumpleistung und kann bei sehr großen Abweichungen deren Signalqualität durch doppelte Rayleigh-Rückstreuung verschlechtern.

Ein flaches Gewinnspektrum über einen breiten Wellenlängenbereich lässt sich durch den Einsatz mehrerer Pumpsignale mit unterschiedlichen Wellenlängen erzielen. Das gewünschte Gewinnspektrum ergibt sich jedoch nur für eine ganz bestimmte Verteilung der Leistungen bei den einzelnen Pumpwellenlängen. Diese müssen an den erforderlichen Gewinn, die Lage der Pumpwellenlängen relativ zu den Signalwellenlängen, die Einfügedämpfung zwischen der Pumpquelle und der Übertragungsfaser und die Eigenschaften der Übertragungsfaser angepasst werden.

Die für die Raman-Verstärkung relevanten Eigenschaften der Übertragungsfaser können auch bei Fasern eines Typs (SSMF, LEAF, TrueWave,...) von Exemplar zu Exemplar so stark streuen, dass sich spürbare Unterschiede der resultierenden Gewinnspektren ergeben. Weiterhin liegen bei der Installation des Systems meistens keine Kenntnisse über die Einfügedämpfung zwischen der Pumpquelle und dem eigentlichen Eingang der Übertragungsfaser vor. Ein gewünschtes Gewinnspektrum lässt sich daher bei Inbetriebnahme des Systems nur einstellen, wenn das aktuell vorliegende Gewinnspektrum in jedem Strekkenabschnitt gemessen werden kann und die Pumpleistungen bei Abweichungen entsprechend angepasst werden.

Bislang sind im wesentlichen vier Verfahren zur Einstellung der Pumpleistungen der Raman-Quellen bei der Inbetriebnahme des Systems bekannt. Das erste Verfahren lässt sich anwenden, wenn das System mit maximaler Kanalzahl in Betrieb geht. In diesem Fall werden die Streckenabschnitte, hinter dem Sender beginnend, einer nach dem anderen hochgefahren. Da bei der Inbetriebnahme bereits alle Kanäle vorhanden sind, können diese als Mess-Signalspektrum für eine Gewinnmessung dienen. Es wird zunächst das Signalspektrum am Ausgang des Streckenabschnitts bei ausgeschalteter Raman-Pumpquelle und anschließend das Spektrum bei eingeschalteter Quelle gemessen. Das Verhältnis der beiden Spektren bzw. die Differenz der Pegel in dB ergibt unmittelbar das an/aus Gewinnspektrum des Raman-Verstärkers. Ein derartiges Ausführungsbeispiel wird in EP 1 130 825 A2 beschrieben. Hier wird eine Gewinnmessung in Anhängigkeit einer spezifischen Konfiguration aktiver Kanäle durchgeführt, was bei Inbetriebnahme des Systems unerwünscht ist.

In der Praxis lässt sich das Verfahren leider selten einsetzen, weil die meisten Systeme nur mit einer sehr kleinen Zahl von Kanälen in Betrieb genommen und erst später hochgerüstet werden. Eine Messung und Einstellung des Gewinnspektrums nur mit den anfangs bereits vorhandenen Signalkanälen wäre zwar prinzipiell möglich, da der Gewinn bei den noch fehlenden Kanälen keine Rolle spielt. Spätestens bei der Inbetriebnahme weiterer Kanäle müsste das Gewinnspektrum dann erneut vermessen und abgeglichen werden. Das dafür erforderliche Abschalten der Raman-Pumpquelle würde die Übertragung der bereits vorhandenen Kanäle stören. Daher sollte das Gewinnspektrum bereits bei der Erstinbetriebnahme des Systems für alle im Endausbau vorhandenen Kanäle vermessen und abgeglichen werden.

Beim zweiten bekannten Verfahren zur Einstellung der Pumpleistungen werden die bei der Erstinbetriebnahme noch nicht vorhandenen Kanäle durch eine in der Wellenlänge abstimmbare Laserquelle ersetzt. Die Ermittelung des Signalspektrums am Ausgang des Streckenabschnitts mit aus- bzw. eingeschalteter Raman-Pumpquelle erfordert daher viele Einzelmessungen, zwischen denen die durchstimmbare Laserquelle zum nächsten Kanal umgeschaltet werden muss. Das Verfahren benötigt neben einer deutlich längeren Messzeit eine Kommunikationsmöglichkeit zur Quelle, damit dieser mitgeteilt werden kann, wann sie welche Wellenlänge einstellen soll. Weiterhin kann die Bereitstellung der Quelle und die Einkoppelung des Ausgangssignals in das Übertragungssystem Probleme bereiten.

Um auf die durchstimmbare Laserquelle verzichten zu können, wurde ein drittes Verfahren zur Messung des Gewinnspektrums vorgeschlagen, das völlig ohne Messsignal am Eingang des Streckenabschnitts auskommt. Das Verfahren nutzt den Effekt, dass die für den Gewinn verantwortliche stimulierte Emission unweigerlich mit der Generation von spontaner Emission einhergeht. Daher wird das Spektrum der vom Raman-Verstärker generierten ASE gemessen und versucht, daraus das Gewinnspektrum zu berechnen. Da verteilte Raman-Verstärker einen sehr komplexen Zusammenhang zwischen dem Gewinnspektrum und dem Spektrum der ASE aufweisen, ist die Berechnung sehr aufwändig und fehleranfällig.

Das vierte vorgeschlagene Verfahren zur Einstellung der Pumpleistungen der Raman-Pumpquelle verzichtet vollständig auf die Messung des Gewinnspektrums und stellt die Pumpleistungen alleine anhand des angegebenen Fasertyps der Übertragungsfaser ein. Da das Verfahren damit weder die genauen Fasereigenschaften noch die Einfügedämpfung zwischen Pumpquelle und Übertragungsfaser kennt, kann das resultierende Gewinnspektrum deutlich vom eigentlich gewünschten abweichen.

Im Folgenden sind Beispiele für den Stand der Technik aufgeführt, in denen einige der oben angeführten Verfahren zum Einsatz kommen.

In WO 00/73826 A2 wird ein optisches Übertragungssystem vorgestellt, das verschiedene in Reihe geschaltete Verstärkereinheiten besitzt. Die Verstärker-Funktionen werden entweder im Betrieb oder mittels Zusatzeinheiten durch Gewinn-Messungen bei der Wellenlänge des Signals kontrolliert und die Pumpleistungen werden dementsprechend eingestellt. Für Test-Messungen des Verstärker-Gewinns werden als ASE-Quelle je nach Anzahl der zu untersuchenden Kanäle sowohl breitbandige als auch schmalbandige Lichtquellen eingesetzt.

Auch in US 2002/0071173 A1 und US 2002/0044336 A1 sind über die Pumpleistung kontrollierbare optische Verstärkereinheiten einer Übertragungsstrecke gezeigt, bei denen jeweils ein Raman-Verstärker einem optischen Faserverstärker vorgeschaltet ist. In US 2002/0071173 A1 enthält der Verstärker ein wellenlängen-abhängiges durchstimmbares Filter. Um ein flaches Gewinnspektrum zu erhalten werden die Gewinnspektren der Verstärkereinheit kontrolliert und das Filter dementsprechend verstellt. In US 2002/0044336 A1 enthält das Verstärkermodul eine Einheit, die feststellt, ob das Eingangssignal aufgrund von Rauscheinflüssen des Raman-Verstärkers unterbrochen ist. Die Pumpleistung der Raman-Quelle wird je nach Signaldetektion eingestellt, wodurch auch der Rauschpegel geregelt werden kann.

Aus US 2002/0054733A1 ist ein typischer Übertragungsabschnitt mit einem Raman-Verstärker und einem dem Raman-Verstärker vorgeschalteten optischen Faserverstärker als Booster bekannt, bei dem das Raman-Gewinnspektrum durch Vergleich des Spektrums der über die aktiven Kanäle übertragenen Signale mit einem gespeicherten Spektrum ermittelt wird. Die Leistung der Pumpquelle des Raman-Verstärkers wird mit einer Regeleinheit derart variiert, dass minimale Anweichungen der verglichenen Spektren auftreten, woraus der Raman-Gewinn hergeleitet wird.

Aufgabe der Erfindung ist es, ein Verfahren und weiterhin eine Anordnung zur Ermittlung eines Gewinnspektrums anzugeben, die eine einfache Einstellung der Leistungen der Pumpquelle des Raman-Verstärkers ermöglichen und bei denen die zuvor erwähnten Nachteile vermieden werden.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen des Patentanspruchs 5.

Vorteilhafte Weiterbildungen der Erfindung sind in den Unteransprüchen angegeben.

Das vorgeschlagene erfindungsgemäße Verfahren verwendet als Mess-Signal die verstärkte spontane Emission ASE, die von im System vorhandenen optischen Verstärkern, beispielsweise Erbium-dotierten Faserverstärkern EDFAs, generiert wird. Da die Faserverstärker EDFAs im gesamten Signalwellenlängenbereich ein flaches Gewinnspektrum aufweisen müssen, erzeugen sie auch im gesamten Wellenlängenbereich ASE, in dem das Gewinnspektrum der verteilten Raman-Verstärker mit einer breitbandigen Pumpquelle gemessen werden muss. Das ASE-Spektrum weist einen anderen Verlauf auf als das Gewinnspektrum der Faserverstärker EDFAs. Die genaue Form des ASE-Spektrums der Faserverstärker EDFAs spielt für die Gewinnmessung der Raman-Verstärker jedoch keine Rolle. Das zu messende Raman-Gewinnspektrum ergibt sich annähernd aus dem Verhältnis der Spektren am Ausgang des Streckenabschnitts mit aus- bzw. eingeschalteter Raman-Pumpquelle und hängt nicht von der Form der Einzelspektren ab.

Grundsätzlich ließe sich mit der ASE der Faserverstärker EDFAs das Gewinnspektrum der verteilten Raman-Verstärker völlig ohne vorhandene Signalkanäle messen. Zum Schutz der Faserverstärker EDFAs verfügen bis zur Produktreife weiterentwickelte WDM-Übertragungssysteme üblicherweise über Vorkehrungen, die ein Einschalten der Faserverstärker EDFAs ohne vorhandene Kanäle verhindern. Das Vorhandensein von Signal-Kanälen stört in vorteilhafter Weise das vorgeschlagene Verfahren nicht, da sich das Verhältnis der Spektren am Faserausgang auch mit einer beliebigen Anzahl von Kanälen bestimmen lässt.

Ein Problem bei der Messung des Gewinnspektrums bereitet die vom verteilten Raman-Verstärker selbst generierte ASE. Diese tritt nur bei eingeschalteter Pumpquelle auf und kann damit das Messergebnis verfälschen. Die vom Raman-Verstärker selbst generierte ASE lässt sich durch eine weitere Messung ermitteln und herausrechnen. Dazu wird das Spektrum am Ausgang des Faserabschnitts zusätzlich bei eingeschalteter Raman-Pumpquelle aber mit ausgeschaltetem Faserverstärker EDFA vor dem Streckenabschnitt gemessen. Die dabei beobachteten Spektralanteile müssen von der Messung mit eingeschalteter Pumpquelle und eingeschaltetem Faserverstärker EDFA abgezogen werden.

Der Einfluss der vom Raman-Verstärker selbst generierten ASE stört um so mehr, je näher der Streckenabschnitt am Eingang des Gesamtsystems liegt. In den ersten Streckenabschnitten ist die Leistung der von den Faserverstärkern EDFAs erzeugten ASE noch vergleichsweise klein. Erst in den Streckenabschnitten weiter hinten übersteigt die als Messsignal verwendete, in den vorangegangenen Verstärkern generierte ASE den Anteil, welcher der Raman-Verstärker im betrachteten Streckenabschnitt beisteuert.

Die Genauigkeit der Messung der Gewinnspektren in den vorderen Streckenabschnitten lässt sich durch einen Kunstgriff steigern. Der Faserverstärker EDFA vor dem ersten Streckenabschnitt (Booster) generiert bei regulärem Betrieb vergleichsweise wenig ASE, da er mit hohen Eingangspegeln arbeitet. Moderne Übertragungssysteme verfügen zumeist über einstellbare Dämpfungsglieder VOA (variable optical attenuator), mit denen sich die Pegel der einzelnen Sender angleichen lassen. Diese Dämpfungsglieder VOAs lassen sich auch zur Absenkung der Eingangspegel in den Booster nutzen. Mit geringeren Eingangspegeln generiert der auf konstante Ausgangsleistung geregelte Booster mehr ASE. Auf diesem Wege lässt sich die vom Booster herrührende ASE stärker wählen als die vom Raman-Verstärker.

Arbeitet das WDM-Übertragungssystem mit mehreren Signalbändern, die in separaten Faserverstärkern EDFAs oder anderen diskreten Verstärkern verarbeitet werden, können die ASE-Spektren dieser Verstärker zur Messung des Gewinnspektrums des verteilten Raman-Verstärkers genutzt werden. Da der verteilte Raman-Verstärker dann alle Signalbänder verarbeiten muss, sollte sich die Gewinnmessung über diese erstrecken. Die diskreten Verstärker erzeugen zwar nur jeweils in einem Band ASE. Das Summensignal der ASE aller diskreten Verstärker deckt aber den gesamten Signalwellenlängenbereich ab. In vorteilhafter Weise können in einem Abschnitt der Übertragungsstrecke mehrere Faserverstärker oder Raman-Verstärker zur Verstärkung eines WDM-Signals in unterschiedlichen spektralen Bereichen angeordnet werden, wobei der Gewinnspektrum eines der Raman-Verstärker nach der erfindungsgemäßen Verfahren ermittelt wird.

Ein Ausführungsbeispiel der Erfindung wird im folgenden anhand der Zeichnung näher erläutert.

Dabei zeigt:

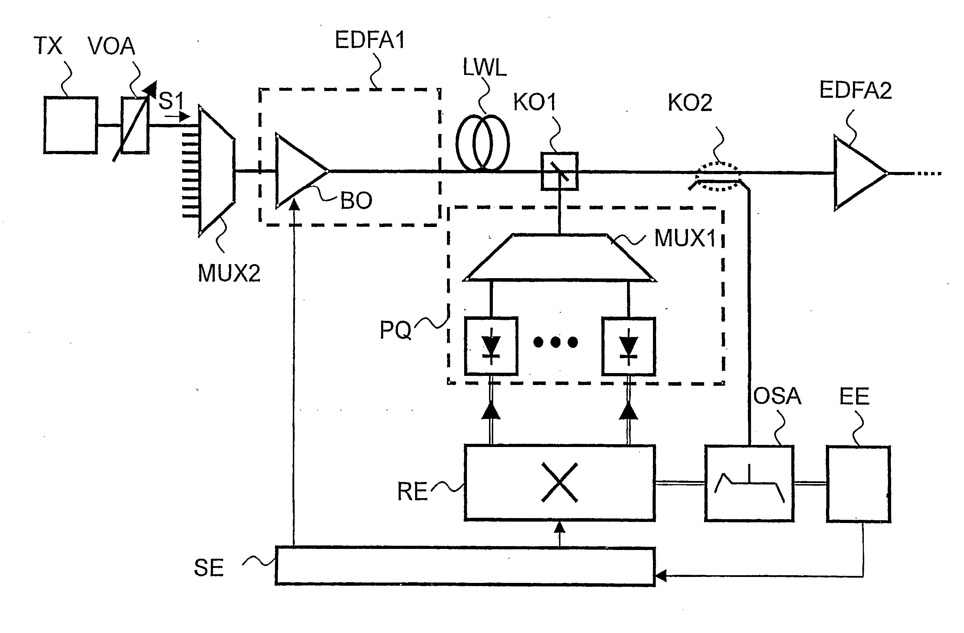

Fig. 1:    eine Anordnung zur Durchführung des erfindungsgemäßen Verfahrens in einem ersten Übertragungsabschnitt

Als Ausführungsbeispiel soll eine in **Fig. 1** dargestellte Anordnung zur Durchführung des erfindungsgemäßen Verfahrens betrachtet werden, die einen ersten Übertragungsabschnitt als Ausschnitt eines WDM-Übertragungssystems beschreibt. An diesem Übertragungsabschnitt ist ein Raman-Verstärker angeschlossen, der eine Pumpquelle PQ mit mehreren Pumpsignalen aufweist. Die Pumpquelle PQ am Ende des Streckenabschnitts verwendet zur Erzeugung der Raman-Pumpstrahlung vier Laserdioden. Pumpsignale der Pumpquelle PQ werden mit Hilfe eines wellenlängenselektiven Multiplexers MUX zusammengefasst. Die Laserdioden erzeugen Signale mit Wellenlängen von 1423 nm, 1436 nm, 1453 nm und 1467 nm. Eine Bandweiche KO1 koppelt die Pumpsignale kontradirektional zur Ausbreitungsrichtung der übertragenen Signale in den Signalpfad bzw. in eine Übertragungsfaser LWL ein.

Der Bandweiche KO1 der Pumpquelle PQ ist im Signalpfad ein Koppler KO2 nachgeschaltet. Mit Hilfe eines dem Koppler KO2 angeschlossenen optischen Spektrumanalysators OSA lässt sich das Spektrum am Ausgang des Streckenabschnitts messen. Der Übertragungsfaser LWL ist ein Verstärker als Booster BO vorgeschaltet. Als Verstärker wird ein Erbium-dotierter Faserverstärker EDFA1 eingesetzt. Es können ebenfalls andere optische Verstärker wie Halbleiterverstärker, Thyliumdotierte Faserverstärker oder diskrete Raman-Verstärker als Booster BO verwendet werden. Dem Booster BO ist ein Multiplexer MUX2 zur Zusammenfassung der zu übertragenden Kanäle eines WDM-Signals vorgeschaltet. Weitere optische Verstärker EDFA2, oder allgemein bezeichnet EDFAs = EDFA1, EDFA2, ..., sind entlang der Übertragungsstrecke dem Koppler KO2 nachgeschaltet.

Bei der Anordnung ist eine Steuereinrichtung SE zum Ein- und Ausschalten von Pumpquellen des Faser-Verstärkers und des Raman-Verstärkers enthalten.

Bei der Inbetriebnahme soll im gewählten Beispiel nur ein einzelner Kanal S1 aus einer Sendeeinheit TX mit einem nachgeschalteten einstellbaren Dämpfungsglied VOA vorhanden sein. Dieser einzelne Kanal S1 reicht aus, um die Sicherheitsabschaltung der Faserverstärker EDFAs zu deaktivieren. Nach dem Einschalten des Senders TX wird das Dämpfungsglied VOA zunächst so eingestellt, dass der Kanal S1 am Eingang des Boosters BO seinen Sollpegel erreicht. Danach wird der Booster BO eingeschaltet. Anschließend wird die Einfügedämpfung des Dämpfungsglieds VOA so weit erhöht, bis der Booster BO genügend verstärkte spontane Emission ASE produziert.

Bei einer ersten Messung eines Spektrums SP1 am Ausgang des Streckenabschnitts mit Hilfe des optischen Spektrumanalysators OSA bleibt die Raman-Pumpquelle PQ ausgeschaltet. Danach wird der Booster BO ausgeschaltet und ein zweites Spektrum SP2 mit eingeschalteter Raman-Pumpquelle PQ gemessen. Bei einer dritten Messung eines dritten Spektrums SP3 wird der Booster BO wieder eingeschaltet. Zur Berechnung des Gewinnspektrums des Raman-Verstärkers wird zunächst das zweite Spektrum SP2 vom dritten Spektrum SP3 abgezogen (beide Spektren in W bzw. W/Hz) und dann die Differenz durch das erste Spektrum SP1 (ebenfalls in W bzw. W/Hz) geteilt. Das Verhältnis (SP3-SP2) / SP1 entspricht dem Spektrum des An/Aus-Gewinns des Raman-Verstärkers. Dem optischen Spektrumanalysator OSA sind eine Bewertungseinheit EE der am optischen Spektrumanalysator OSA aufgenommen Spektren und ein Regler RE zur Steuerung der spektralen Leistungsanteile der Pumpquelle PQ für eine Neuregelung des Gewinnspektrums GS angeschlossen. Die Bewertungseinheit EE ist ebenfalls an der Steuereinrichtung SE zur Synchronisation der Ein- und Ausschaltung der jeweiligen Verstärker mit der Aufnahme der gewünschten Spektren angeschlossen.

Je nach Konfiguration von Übertragungsstrecken kann die verstärkte spontan Emission aus dem Raman-Verstärker vernachlässigt werden, d. h. die Messung des zweiten Spektrums SP2 erspart werden. In diesem Fall werden nur zwei Messungen mit ein- und ausgeschalteten Pumpquellen des Raman-Verstärkers bei eingeschaltetem optischen Verstärker durchgeführt. Das Gewinnspektrum GS ist dabei als Verhältnis SP3/SP1 zwischen den ersten und dritten Spektren ermittelt.

Nach dem Einpegeln des Raman-Verstärkers im ersten Übertragungsstreckenabschnitt wird der im zweiten Streckenabschnitt folgende Faserverstärker EDFA2 in Betrieb genommen. Anschließend kann die Gewinnmessung des Raman-Verstärkers im zweiten Streckenabschnitt erfolgen. Das erste Spektrum SP1 wird wieder mit ausgeschalteter Pumpquelle gemessen, das zweite Spektrum SP2 mit eingeschalteter Pumpquelle und ausgeschaltetem EDFA2 vor dem Streckenabschnitt und das dritte Spektrum SP3 mit eingeschalteter Raman-Pumpquelle und eingeschaltetem EDFA2. Die Berechnung des Gewinnspektrums erfolgt wie oben beschrieben. In der gleichen Weise lassen sich auch die Gewinnspektren der folgenden Streckenabschnitte ermitteln.

**Patentansprüche**

1. Verfahren zur Ermittlung eines Gewinnspektrums, GS, eines Raman-Verstärkers in einem WDM-Übertragungssystem, der einem optischen Verstärker (BO) nachgeschaltet ist,
wobei
zur Ermittlung des Gewinnspektrums, GS, Kanalsignale gedämpft werden, so dass am Ausgang des optischen Verstärkers eine hohe verstärkte spontane Emission, ASE, auftritt,
ein erstes Spektrum, SP1, bei ausgeschalteter Raman-Pumpquelle (PQ) des Raman-Verstärkers und eingeschalteter Pumpquelle des optischen Verstärkers gemessen wird,
ein zweites Spektrum, SP2, bei eingeschalteter Raman Pumpquelle (PQ) des Raman-Verstärkers und ausgeschalteter Pumpquelle des optischen Verstärkers gemessen wird,
ein drittes Spektrum, SP3, mit eingeschalteter Raman-Pumpquelle (PQ) des Raman-Verstärkers und eingeschalteter Pumpquelle des optischen Verstärkers gemessen wird, und
das Gewinnspektrum, GS, des Raman-Verstärkers nach der folgenden Regel errechnet wird:

$$GS = \frac{SP3 - SP2}{SP1}.$$

2. Verfahren nach Anspruch 1,
**dadurch gekennzeichnet**,
dass bei Übertragungsstrecken mit weiteren optischen Verstärkern und weiteren Raman-Verstärkern durch deren Ein- und Ausschalten von deren Pumpquellen weitere Spektren gemessen werden und daraus die Gewinnspektren der Raman-Verstärker ermittelt werden.

3. Verfahren nach Anspruch 1 oder 2,
**dadurch gekennzeichnet**,
dass bei Inbetriebnahme einer Übertragungsstrecke mit mehreren Abschnitten, die wenigstens einen optischen Verstärker und einen Raman-Verstärker enthalten, die Ermittlung der Gewinnspektren, GS, abschnittsweise durchgeführt wird.

4. Anordnung zur Ermittlung/Messung eines Gewinnspektrums, GS, eines Raman-Verstärkers in einem WDM-Übertragungssystem, der einem optischen Verstärker (BO) nachgeschaltet ist,
wobei
die Anordnung einen optischen Spektrumanalysator (OSA) und eine Steuereinrichtung (SE) zum Ein- und Ausschalten von Pumpquellen des optischen Verstärkers und des Raman-Verstärkers enthält,
dem optischen Verstärker eine Dämpfungsvorrichtung (VOA) vorgeschaltet ist, wobei die Einfügedämpfung des Dämpfungsglieds VOA bei der Messung von Spektren so weit erhöht ist, dass Kanalsignale (S1) unterdrückt werden und der optische Verstärker (BO) genügend verstärkte spontane Emission, ASE, produziert,
die Anordnung ausgebildet ist
zur Messung eines ersten Spektrums, SP1, bei ausgeschalteter Raman-Pumpquelle (PQ) des Raman-Verstärkers und eingeschalteter Pumpquelle des optischen Verstärkers,
zur Messung eines zweiten Spektrums, SP2, bei eingeschalteter Raman-Pumpquelle (PQ) des Raman-Verstärkers und ausgeschalteter Pumpquelle des optischen Verstärkers,
zur Messung eines dritten Spektrums, SP3, mit eingeschalteter Raman-Pumpquelle (PQ) des Raman-Verstärkers und eingeschalteter Pumpquelle des optischen Verstärkers, wobei
das Gewinnspektrum, GS, des Raman-Verstärkers nach der folgenden Regel errechnet wird:

$$GS = \frac{SP3 - SP2}{SP1}.$$

5. Anordnung nach Anspruch 4,
**dadurch gekennzeichnet**,
dass dem optischen Spektrumanalysator (OSA) eine Bewertungseinheit (EE) von am optischen Spektrumanalysator (OSA) aufgenommen Spektren und ein Regler (RE) zur Steuerung der spektralen Leistungsanteile der Pumpquelle (PQ) angeschlossen sind.

6. Anordnung nach Anspruch 4 oder 5,

**dadurch gekennzeichnet**,
dass als optischer Verstärker ein Faserverstärker (EDFA1, EDFA2), ein Halbleiterverstärker oder ein diskreter Raman-Verstärker vorgesehen ist.

## Claims

1. A method for determining a gain spectrum, GS, of a Raman amplifier located downstream of an optical fibre amplifier (BO) in a WDM transmission system, wherein

   channel signals are attenuated in order to determine the gain spectrum, GS, so that a high amplified spontaneous emission, ASE, occurs at the output of the optical amplifier,

   a first spectrum, SP1, is measured with the Raman pumping source (PS) for the Raman amplifier switched off and the pumping source for the optical amplifier switched on,

   a second spectrum, SP2, is measured with the Raman pumping source (PS) for the Raman amplifier switched on and the pumping source for the optical amplifier switched off,

   a third spectrum, SP3, is measured with the Raman pumping source (PS) for the Raman amplifier switched on and the pumping source for the optical amplifier switched on and

   the gain spectrum, GS, of the Raman amplifier is calculated according to the following principle:

   $$GS = \frac{SP3 - SP2}{SP1}.$$

2. The method according to claim 1,
   **characterized in that**
   additional spectra are measured for transmission links with additional optical amplifiers and additional Raman amplifiers by switching their pumping sources on and off and the gain spectra of the Raman amplifiers are determined from this.

3. The method according to claim 1 or 2,
   **characterized in that**
   during the commissioning of a transmission link having a plurality of sections containing at least one optical amplifier and a Raman amplifier, said determination of the gain spectra, GS, is carried out section by section.

4. An arrangement for determining/measuring a gain spectrum, GS, of a Raman amplifier located downstream of an optical amplifier (BO) in a WDM transmission system, wherein

   the arrangement contains an optical spectrum analyser (OSA) and a control device (CD) for switching the pumping sources of the optical amplifier and of the Raman amplifier on and off,

   an attenuation device (VOA) is located upstream of the optical amplifier, wherein when spectra are being measured the insertion loss of the attenuating element VOA is increased to such an extent that channel signals (S1) are suppressed and the optical amplifier (BO) produces a sufficiently amplified spontaneous emission, ASE,

   the arrangement is configured
   for the measurement of a first spectrum, SP1, with the Raman pumping source (PS) of the Raman amplifier switched off and the pumping source of the optical amplifier switched on,

   for measurement of a second spectrum, SP2, with the Raman pumping source (PS) of the Raman amplifier switched on and the pumping source of the optical amplifier switched off,

   for measurement of a third spectrum, SP3, with the Raman pumping source (PS) of the Raman amplifier switched on and the pumping source of the optical amplifier switched on, wherein

   the gain spectrum, GS, for the Raman amplifier is calculated according to the following principle:

   $$GS = \frac{SP3 - SP2}{SP1}.$$

5. The arrangement according to claim 4,
   **characterized in that**
   an evaluation element (EE) for spectra recorded by the optical spectrum analyser (OSA) and a regulator (RE) for controlling the spectral power components of the pumping source (PS) are connected to the optical spectrum analyser (OSA).

6. The arrangement according to claim 4 or 5,
   **characterized in that**
   a fibre amplifier (EDFA1, EDFA2), a semiconductor amplifier or a discrete Raman amplifier is provided as the optical amplifier.

## Revendications

1. Procédé de détermination d'un spectre de gain, GS, d'un amplificateur de Raman dans un système de transmission à multiplexage en longueur d'onde, auquel un amplificateur optique (BO) est monté en aval, dans lequel :

   - aux fins de la détermination du spectre de gain, GS, des signaux de canal sont atténués de telle sorte qu'une émission spontanée amplifiée élevée ASE est produite à la sortie de l'amplificateur optique,

- un premier spectre, SP1, est mesuré alors qu'une source de pompage (PQ) de Raman de l'amplificateur de Raman est désactivée et qu'une source de pompage de l'amplificateur optique est activée,

- un deuxième spectre, SP2, est mesuré alors qu'une source de pompage (PQ) de Raman de l'amplificateur de Raman est activée et qu'une source de pompage de l'amplificateur optique est désactivée,

- un troisième spectre, SP3, est mesuré alors qu'une source de pompage (PQ) de Raman de l'amplificateur de Raman est activée et qu'une source de pompage de l'amplificateur optique est activée, et

- le spectre de gain, GS, de l'amplificateur de Raman est calcul selon la règle suivante :

$$GS = \frac{SP3 - SP2}{SP1}.$$

2. Procédé selon la revendication 1, caractérisé en ce que dans le cas de lignes de transmission comprenant des amplificateurs optiques supplémentaires et des amplificateurs de Raman supplémentaires, des spectres supplémentaires sont mesurés au moyen de l'activation et de la désactivation de leurs sources de pompage et les spectres de gain des amplificateurs de Raman sont déterminés sur cette base.

3. Procédé selon la revendication 1 ou 2, caractérisé en ce que lors de la mise en service d'une ligne de transmission comprenant plusieurs sections qui contiennent au moins un amplificateur optique et un amplificateur de Raman, la détermination des spectres de gain, GS, est réalisée section par section.

4. Agencement destiné à déterminer/mesurer un spectre de gain, GS, d'un amplificateur de Raman dans un système de transmission à multiplexage en longueur d'onde, auquel un amplificateur optique (BO) est monté en aval, dans lequel :

- l'agencement contient un analyseur de spectre optique (OSA) et un dispositif de commande (SE) pour l'activation et la désactivation de sources de pompage de l'amplificateur optique et de l'amplificateur de Raman,

- un dispositif d'atténuation (VOA) est monté en amont de l'amplificateur optique, étant entendu que l'atténuation d'insertion de l'élément atténuateur VOA est augmentée lors de la mesure des spectres de telle sorte que les signaux de canal (S1) sont supprimés et que l'amplificateur optique (BO) produit une émission spontanée, ASE, suffisamment amplifiée,

- l'agencement est conçu :

pour mesurer un premier spectre, SP1, alors qu'une source de pompage (PQ) de Raman de l'amplificateur de Raman est désactivée et qu'une source de pompage de l'amplificateur optique est activée,

pour mesurer un deuxième spectre, SP2, alors qu'une source de pompage (PQ) de Raman de l'amplificateur de Raman est activée et qu'une source de pompage de l'amplificateur optique est désactivée,

pour mesurer un troisième spectre, SP3, alors qu'une source de pompage (PQ) de Raman de l'amplificateur de Raman est activée et qu'une source de pompage de l'amplificateur optique est activée, étant entendu que :

le spectre de gain, GS, de l'amplificateur de Raman est calcul selon la règle suivante :

$$GS = \frac{SP3 - SP2}{SP1}.$$

5. Agencement selon la revendication 4, caractérisé en ce qu'une unité d'évaluation (EE) pour les spectres reçus au niveau de l'analyseur de spectre optique (OSA) et un régulateur (RE) destiné à commander les parts de puissance spectrales de la source de pompage (PQ) sont reliés à l'analyseur de spectre optique (OSA).

6. Agencement selon la revendication 4 ou 5, caractérisé en ce qu'un amplificateur à fibre (EDFA1, EDFA2), un amplificateur à semi-conducteur ou un amplificateur de Raman discret est prévu comme amplificateur optique.

TX VOA S1 MUX2 EDFA1 BO LWL KO1 KO2 EDFA2 MUX1 PQ RE OSA EE SE

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1130825 A2
- WO 0073826 A2
- US 20020071173 A1
- US 20020044336 A1
- US 20020054733 A1